# EUROPÄISCHE PATENTANMELDUNG

(11) **EP 3 418 316 A1**
(43) Veröffentlichungstag der Anmeldung: **26.12.2018**
(21) Anmeldenummer: 17176650.4
(22) Anmeldetag: 19.06.2017
(51) Int. Cl.: C08G 69/26, C08L 77/06

(54) **POLYMERFILME MIT ERHÖHTER SAUERSTOFFBARRIERE**

(71) Anmelder: BASF SE, 67056 Ludwigshafen am Rhein (DE)
(72) Erfinder: Die Erfindernennung liegt noch nicht vor

(57) **Zusammenfassung**

Die vorliegende Erfindung betrifft die Verwendung eines tetrahydrofuranhaltigen Polyamids (tP) in einem Polymerfilm (P), der mindestens eine erste Schicht umfasst, die das tetrahydrofuranhaltige Polyamid (tP) enthält, zur Erhöhung der Sauerstoffbarriere des Polymerfilms (P). Darüber hinaus betrifft die vorliegende Erfindung ein Verfahren zur Herstellung des Polymerfilms (P).

## Beschreibung

Die vorliegende Erfindung betrifft die Verwendung eines tetrahydrofuranhaltigen Polyamids (tP) in einem Polymerfilm (P), der mindestens eine erste Schicht umfasst, die das tetrahydrofuranhaltige Polyamid (tP) enthält, zur Erhöhung der Sauerstoffbarriere des Polymerfilms (P). Darüber hinaus betrifft die vorliegende Erfindung ein Verfahren zur Herstellung des Polymerfilms (P).

Polyamide sind im Allgemeinen teilkristalline Polymere, die industriell von besonderer Bedeutung sind, da sie sich durch sehr gute mechanische Eigenschaften auszeichnen. Insbesondere besitzen sie eine hohe Festigkeit, Steifigkeit und Zähigkeit, eine gute Chemikalienbeständigkeit sowie eine hohe Abriebfestigkeit. Sie werden beispielsweise zur Herstellung von Angelschnüren, Kletterseilen und Teppichböden verwendet. Darüber hinaus finden Polyamide Verwendung zur Herstellung von Verpackungsfilmen und Verpackungshüllen.

Eine Übersicht über die Verwendung als Verpackungsfilme und Verpackungshüllen sowie Verfahren zu deren Herstellung ist beispielsweise in Encyclopedia of polymer science and engineering, 2nd ed., Vol. 7, pp. 73-127, Vol. 10, pp. 684-695 (John Wiley & Sons 1987*)* beschrieben.

Die US 2014/0135449 beschreibt ein Verfahren zur Herstellung von Polyamiden, die Tetrahydrofuraneinheiten in der Hauptkette enthalten, ausgehend von Dicarbonsäuren und 2,5-Bis(aminomethyl)tetrahydrofuran. Die Herstellung der Polyamide erfolgt mehrstufig, sie können dann in Spritzgussverfahren eingesetzt werden.

Die WO 2016/019267 beschreibt furanbasierte Polyamide sowie Blends aus diesen mit anderen Polyamiden. Aus diesen furanbasierten Polyamiden können Multilayerstrukturen hergestellt werden. Die furanbasierten Polyamide werden hergestellt durch Polymerisation einer Furandicarbonsäure mit einem Diamin.

Nachteilig bei den in der WO 2016/019267 beschriebenen furanbasierten Polymeren ist, dass diese üblicherweise amorph sind. Außerdem sind diese Polyamide nicht in einem großtechnischen Schmelzeverfahren herstellbar.

Die der vorliegenden Erfindung zugrunde liegende Aufgabe besteht somit darin, Polymerfilme (P) bereitzustellen, die gegenüber den bekannten Polymerfilmen eine höhere Sauerstoffbarriere, also eine geringere Sauerstoffdurchlässigkeit, aufweisen.

Außerdem soll das Polyamid, das die Polymerfilme (P) enthalten, in einem Schmelzeverfahren herstellbar sein.

Gelöst wird diese Aufgabe durch die Verwendung eines tetrahydrofuranhaltigen Polyamids (tP) enthaltend Tetrahydrofuraneinheiten der allgemeinen Formel (I) 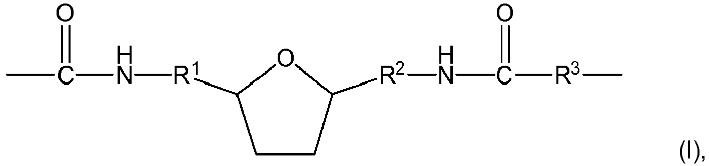 in der
- R¹, R²: unabhängig voneinander ausgewählt sind aus C₁-C₁₀-Alkandiyl;
- R³: ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁴, C₁-C₁₀-Alkyl und C₆-C₁₀-Aryl, wobei
R⁴ ausgewählt ist aus der Gruppe bestehend aus H und C₁-C₁₀-Alkyl,
in einem Polymerfilm (P), der mindestens eine erste Schicht umfasst, die das tetrahydrofuranhaltige Polyamid (tP) enthält, zur Erhöhung der Sauerstoffbarriere des Polymerfilms (P).

Es wurde überraschend gefunden, dass bei der erfindungsgemäßen Verwendung des tetrahydrofuranhaltigen Polyamids (tP) Polymerfilme (P) erhältlich sind, die eine erhöhte Sauerstoffbarriere aufweisen. Insbesondere bei 0 % relativer Luftfeuchte weisen sie eine besonders niedrige Sauerstoffpermeabilität auf verglichen mit Polymerfilmen, die im Stand der Technik erhältlich sind. Insbesondere wenn in einer bevorzugten Ausführungsform der vorliegenden Erfindung das tetrahydrofuranhaltige Polyamid (tP) ein Copolymer ist, wird zudem auch eine besonders niedrige Sauerstoffpermeabilität bei höheren relativen Luftfeuchten von beispielsweise 85 % erzielt.

Die Polymerfilme (P) sind daher besonders gut geeignet für Lebensmittelanwendungen und Verpackungen.

### Tetrahydrofuranhaltiges Polyamid (tP)

Erfindungsgemäß enthält das tetrahydrofuranhaltige Polyamid (tP) Tetrahydrofuraneinheiten der allgemeinen Formel (I). 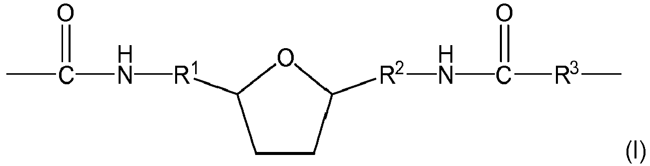 worin
- R¹, R² und R³: die vorstehend beschriebene Bedeutung haben.

Das tetrahydrofuranhaltige Polyamid (tP) enthält die Tetrahydrofuraneinheiten bevorzugt als wiederholende Einheiten.

Die Tetrahydrofuraneinheiten als wiederholende Einheiten der allgemeinen Formel (I) sind bevorzugt in der Hauptkette des tetrahydrofuranhaltigen Polyamids (tP) enthalten. Insbesondere bevorzugt enthält das tetrahydrofuranhaltige Polyamid (tP) keine Seitenketten, die Tetrahydrofuraneinheiten als wiederholende Einheiten der allgemeinen Formel (I) enthalten. Am meisten bevorzugt enthält das tetrahydrofuranhaltige Polyamid (tP) keine Seitenketten.

Das tetrahydrofuranhaltige Polyamid (tP) ist also am meisten bevorzugt ein lineares tetrahydrofuranhaltiges Polyamid (tP).

Bevorzugt haben R¹, R² und R³ der allgemeinen Formel (I) die folgende Bedeutung:
- R¹, R²: sind unabhängig voneinander ausgewählt aus unsubstituiertem C₁-C₄-Alkandiyl;
- R³: ist ausgewählt aus der Gruppe bestehend aus unsubstituiertem C₁-C₄₀-Alkandiyl und unsubstituiertem C₆-C₂₀-Arylen.

Mehr bevorzugt haben R¹, R² und R³ der allgemeinen Formel (I) die folgende Bedeutung:
- R¹, R²: sind dasselbe unsubstituierte C₁-C₄-Alkandiyl;
- R³: ist ausgewählt aus der Gruppe bestehend aus unsubstituiertem C₁-C₃₆-Alkandiyl und unsubstituiertem C₆-C₁₀-Arylen.

Am meisten bevorzugt sind in der allgemeinen Formel (I)
- R¹, R²: beide Methylen;
- R³: ist ausgewählt aus der Gruppe bestehend aus unsubstituiertem C₄-C₁₂-Alkandiyl.

Gegenstand der vorliegenden Erfindung ist daher auch die erfindungsgemäße Verwendung, wobei in der allgemeinen Formel (I) R¹ und R² beide Methylen und R³ ausgewählt aus der Gruppe bestehend aus unsubstituiertem C₄-C₁₂-Alkandiyl sind.

Unter "C₁-C₄₀-Alkandiyl" wie beispielsweise oben für R³ für das tetrahydrofuranhaltige Polyamid (tP) in der allgemeinen Formel (I) beschrieben, wird im Rahmen der vorliegenden Erfindung ein Kohlenwasserstoff mit 1 bis 40 Kohlenstoffatomen und zwei freien Valenzen verstanden. Es handelt sich also um ein Biradikal mit 1 bis 40 Kohlenstoffatomen. "C₁-C₄₀-Alkandiyl" umfasst sowohl lineare als auch zyklische sowie gesättigte und ungesättigte Kohlenwasserstoffe mit 1 bis 40 Kohlenstoffatomen und zwei freien Valenzen. Kohlenwasserstoffe mit einem zyklischen und einem linearen Anteil fallen ebenfalls unter den Begriff "C₁-C₄₀-Alkandiyl". Beispiele für C₁-C₄₀-Alkandiyle sind Methylen, Ethylen (Ethan-1,2-Diyl; Dimethylen), Propan-1,3-Diyl (Trimethylen), Propylen (Propan-1,2-Diyl) und Butan-1,4-Diyl (Tetramethylen). Entsprechende Ausführungen gelten für C₁-C₃₆-Alkandiyl, für C₁-C₁₀-Alkandiyl, für C₄-C₁₂-Alkandiyl und für C₁-C₄-Alkandiyl.

"C₆-C₄₀-Arylen" bezeichnet einen aromatischen Kohlenwasserstoff mit zwei freien Valenzen und sechs bis vierzig Kohlenstoffatomen. Anders ausgedrückt bezeichnet "C₆-C₄₀-Arylen" ein aromatisches Biradikal mit sechs bis vierzig Kohlenstoffatomen. Ein C₆-C₄₀-Arylen weist also ein aromatisches Ringsystem auf. Dieses Ringsystem kann monozyklisch, bizyklisch oder polyzyklisch sein. Entsprechende Ausführungen gelten für C₆-C₂₀-Arylen und C₆-C₁₀-Arylen.

"C₁-C₁₀-Alkyl" bezeichnet gesättigte und ungesättigte Kohlenwasserstoffe mit einer freien Valenz (Radikal) und einem bis zehn Kohlenstoffatomen. Die Kohlenwasserstoffe können linear, verzweigt oder zyklisch sein. Ebenso ist es möglich, dass sie eine zyklische und eine lineare Komponente enthalten. Beispiele für Alkylgruppen sind Methyl, Ethyl, n-Propyl, Isopropyl, n-Butyl, Isobutyl, sec-Butyl, tert-Butyl, Hexyl und Cyclohexyl.

"C₆-C₁₀-Aryl" bezeichnet das Radikal eines aromatischen Kohlenwasserstoffs mit sechs bis zehn Kohlenstoffatomen. Ein Aryl weist also ein aromatisches Ringsystem auf. Dieses Ringsystem kann monozyklisch, bizyklisch oder polyzyklisch sein. Beispiele für Arylgruppen sind Phenyl und Naphthyl wie beispielsweise 1-Naphthyl und 2-Naphthyl.

"Ein tetrahydrofuranhaltiges Polyamid (tP)" bedeutet im Rahmen der vorliegenden Erfindung sowohl genau ein tetrahydrofuranhaltiges Polyamid (tP) als auch eine Mischung aus zwei oder mehreren tetrahydrofuranhaltigen Polyamiden (tP).

Das tetrahydrofuranhaltige Polyamid (tP) kann ein Homopolymer oder ein Copolymer sein. Bevorzugt ist das tetrahydrofuranhaltige Polyamid (tP) ein Copolymer.

Gegenstand der vorliegenden Erfindung ist daher auch die erfindungsgemäße Verwendung, wobei das tetrahydrofuranhaltige Polyamid (tP) ein Copolymer ist.

Ist das tetrahydrofuranhaltige Polyamid (tP) ein Homopolymer, so besteht das tetrahydrofuranhaltige Polyamid (tP) aus Tetrahydrofuraneinheiten der allgemeinen Formel (I).

Ist das tetrahydrofuranhaltige Polyamid (tP) ein Copolymer, so enthält das tetrahydrofuranhaltige Polyamid (tP) neben den Tetrahydrofuraneinheiten der allgemeinen Formel (I) zusätzliche Einheiten. Bevorzugt enthält das tetrahydrofuranhaltige Polyamid (tP) dann zusätzlich Polyamideinheiten (PE).

Die Polyamideinheiten (PE) sind bevorzugt ausgewählt aus der Gruppe bestehend aus Polyamideinheiten der allgemeinen Formel (II) 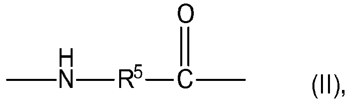 in der
- R⁵: ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁸, C₁-C₁₀-Alkyl und C₆-C₁₀-Aryl, wobei
R⁸ ausgewählt ist aus der Gruppe bestehend aus H und C₁-C₁₀-Alkyl,

Polyamideinheiten der allgemeinen Formel (III) 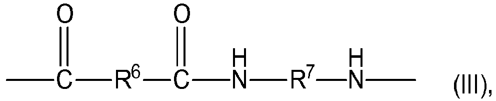 in der
- R⁶, R⁷: unabhängig voneinander ausgewählt sind aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁹, C₁-C₁₀-Alkyl und C₆-C₁₀-Aryl, wobei
R⁹ ausgewählt ist aus der Gruppe bestehend aus H und C₁-C₁₀-Alkyl,
und Kombinationen daraus.

Gegenstand der vorliegenden Erfindung ist daher auch die erfindungsgemäße Verwendung, wobei das tetrahydrofuranhaltige Polyamid (tP) zusätzlich Polyamideinheiten (PE) enthält, die ausgewählt sind aus der Gruppe bestehend aus Polyamideinheiten der allgemeinen Formel (II) 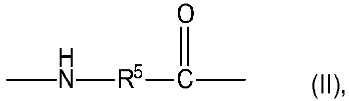 in der
- R⁵: ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁸, C₁-C₁₀-Alkyl und C₆-C₁₀-Aryl, wobei
R⁸ ausgewählt ist aus der Gruppe bestehend aus H und C₁-C₁₀-Alkyl,

Polyamideinheiten der allgemeinen Formel (III) 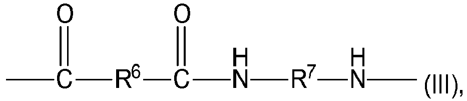 in der
- R⁶, R⁷: unabhängig voneinander ausgewählt sind aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁹, C₁-C₁₀-Alkyl und C₆-C₁₀-Aryl, wobei
R⁹ ausgewählt ist aus der Gruppe bestehend aus H und C₁-C₁₀-Alkyl,
und Kombinationen daraus.

Besonders bevorzugt haben die Substituenten der allgemeinen Formeln (II) und (III) die folgende Bedeutung:
- R⁵: ist ausgewählt aus der Gruppe bestehend aus unsubstituiertem C₁-C₂₀-Alkandiyl und unsubstituiertem C₆-C₂₀-Arylen;
- R⁶, R⁷: sind unabhängig voneinander ausgewählt aus der Gruppe bestehend aus unsubstituiertem C₁-C₄₀-Alkandiyl und unsubstituiertem C₆-C₂₀-Arylen.

Am meisten bevorzugt haben die Substituenten der allgemeinen Formeln (II) und (III) die folgende Bedeutung:
- R⁵: ist ausgewählt aus der Gruppe bestehend aus unsubstituiertem C₄-C₁₂-Alkandiyl;
- R⁶, R⁷: sind unabhängig voneinander ausgewählt aus der Gruppe bestehend aus unsubstituiertem C₄-C₃₆-Alkandiyl.

Wenn das tetrahydrofuranhaltige Polyamid (tP) ein Copolymer ist, kann es ein statistisches Copolymer sein. Ebenso ist es möglich, dass es sich um ein Blockcopolymer handelt. Bevorzugt ist das tetrahydrofuranhaltige Polyamid (tP) dann ein statistisches Copolymer.

In einem statistischen Copolymer wechseln sich Tetrahydrofuraneinheiten der allgemeinen Formel (I) statistisch mit den zusätzlichen Einheiten, bevorzugt mit den Polyamideinheiten (PE), ab. Dies bedeutet, dass beispielsweise auf eine Tetrahydrofuraneinheit der allgemeinen Formel (I) drei zusätzliche Einheiten, bevorzugt drei Polyamideinheiten (PE), folgen, auf die wiederum beispielsweise zwei Tetrahydrofuraneinheiten der allgemeinen Formel (I) folgen, auf die dann zwei zusätzliche Einheiten, bevorzugt zwei Polyamideinheiten (PE), folgen.

Bei einem Blockcopolymer wechseln sich Blöcke von Tetrahydrofuraneinheiten der allgemeinen Formel (I) mit Blöcken der zusätzlichen Einheiten, bevorzugt der Polyamideinheiten (PE), ab.

Gegenstand der vorliegenden Erfindung ist daher auch die erfindungsgemäße Verwendung, wobei das tetrahydrofuranhaltige Polyamid (tP) ein statistisches Copolymer ist.

Ist das tetrahydrofuranhaltige Polyamid (tP) ein Copolymer, so enthält es beispielsweise im Bereich von 1 bis 51 Mol-% Tetrahydrofuraneinheiten der allgemeinen Formel (I) und im Bereich von 49 bis 99 Mol-% Polyamideinheiten (PE), jeweils bezogen auf die Gesamtstoffmenge des tetrahydrofuranhaltigen Polyamids (tP).

Bevorzugt enthält das tetrahydrofuranhaltige Polyamid (tP) dann im Bereich von 5 bis 40 Mol-% Tetrahydrofuraneinheiten der allgemeinen Formel (I) und im Bereich von 60 bis 95 Mol-% Polyamideinheiten (PE), jeweils bezogen auf die Gesamtstoffmenge des tetrahydrofuranhaltigen Polyamids (tP).

Besonders bevorzugt enthält das tetrahydrofuranhaltige Polyamid (tP) dann im Bereich von 10 bis 35 Mol-% Tetrahydrofuraneinheiten der allgemeinen Formel (I) und im Bereich von 65 bis 90 Mol-% Polyamideinheiten (PE), jeweils bezogen auf die Gesamtstoffmenge des tetrahydrofuranhaltigen Polyamids (tP).

Gegenstand der vorliegenden Erfindung ist daher auch die erfindungsgemäße Verwendung, wobei das tetrahydrofuranhaltige Polyamid (tP) im Bereich von 1 bis 51 mol.-% Tetrahydrofuraneinheiten der allgemeinen Formel (I) und im Bereich von 49 bis 99 mol.-% Polyamideinheiten (PE) enthält, jeweils bezogen auf die Gesamtstoffmenge des tetrahydrofuranhaltigen Polyamids (tP).

Das tetrahydrofuranhaltige Polyamid (tP) weist im Allgemeinen eine Viskositätszahl (VZ) im Bereich von 60 bis 300 ml/g auf, bevorzugt im Bereich von 70 bis 280 ml/g und besonders bevorzugt im Bereich von 80 bis 260 ml/g, wobei die Bestimmung in einer Lösung von 0,5 g tetrahydrofuranhaltigem Polyamid (tP) in 100 ml einer 96%igen Schwefelsäure erfolgt.

Das tetrahydrofuranhaltige Polyamid (tP) weist üblicherweise eine Glasübergangstemperatur (T_{G}) auf, die im Bereich von 35 bis 75 °C, bevorzugt im Bereich von 40 bis 72 °C und insbesondere bevorzugt im Bereich von 45 bis 70 °C liegt, bestimmt mittels dynamischer Differenzkalorimetrie (Differential Scanning Calorimetry; DSC).

Gegenstand der vorliegenden Erfindung ist daher auch die erfindungsgemäße Verwendung, wobei das tetrahydrofuranhaltige Polyamid (tP) eine Glasübergangstemperatur (T_{G}), die im Bereich von 35 bis 75 °C liegt, aufweist.

Das tetrahydrofuranhaltige Polyamid (tP) kann teilkristallin oder amorph sein. Bevorzugt ist das tetrahydrofuranhaltige Polyamid (tP) teilkristallin.

Wenn das tetrahydrofuranhaltige Polyamid (tP) teilkristallin ist, so weist es üblicherweise eine Schmelztemperatur (T_{M}) auf. Die Schmelztemperatur (T_{M}) des tetrahydrofuranhaltigen Polyamids (tP) liegt dann beispielsweise im Bereich von 140 bis 220 °C, bevorzugt im Bereich von 150 bis 215 °C und insbesondere bevorzugt im Bereich von 160 bis 205 °C, bestimmt mittels dynamischer Differenzkalorimetrie (Differential Scanning Calorimetry; DSC).

Gegenstand der vorliegenden Erfindung ist daher auch die erfindungsgemäße Verwendung, wobei das tetrahydrofuranhaltige Polyamid (tP) eine Schmelztemperatur (T_{M}), die im Bereich von 140 bis 220 °C liegt, aufweist.

Das tetrahydrofuranhaltige Polyamid (tP) kann nach allen dem Fachmann bekannten Methoden hergestellt werden.

Bevorzugt wird das tetrahydrofuranhaltige Polyamid (tP) hergestellt zumindest durch Umsetzung der folgenden Komponenten:
(A) mindestens ein Diamin der allgemeinen Formel (IV) 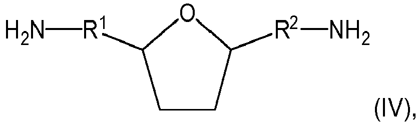 in der
   - R¹, R²: die vorstehend beschriebene Bedeutung haben,
(B) mindestens ein Dicarbonsäurederivat ausgewählt aus der Gruppe bestehend aus einer Dicarbonsäure der allgemeinen Formel (V)

   HOOC-R³-COOH (V),

   einem Dicarbonsäureester der allgemeinen Formel (VI)

   R¹⁰OOC-R³-COOR¹¹ (VI),

   in der
   - R¹⁰, R¹¹: unabhängig voneinander ausgewählt sind aus der Gruppe bestehend aus C₁-C₁₀-Alkyl, C₆-C₁₀-Aryl und C₆-C₁₂-Aralkyl,
   und einem Dinitril der allgemeinen Formel (VII)

   NC-R³-CN (VII),

   wobei
   R³ jeweils die vorstehend beschriebene Bedeutung hat.

Gegenstand der vorliegenden Erfindung ist daher auch die erfindungsgemäße Verwendung, wobei das tetrahydrofuranhaltige Polyamid (tP) hergestellt wird zumindest durch die Umsetzung der folgenden Komponenten:
(A) mindestens ein Diamin der allgemeinen Formel (IV) 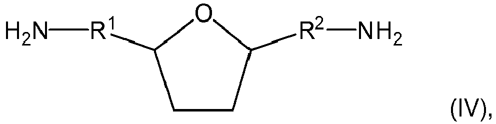
(B) mindestens ein Dicarbonsäurederivat ausgewählt aus der Gruppe bestehend aus einer Dicarbonsäure der allgemeinen Formel (V)

   HOOC-R³-COOH (V),

   einem Dicarbonsäureester der allgemeinen Formel (VI)

   R¹⁰OOC-R³-COOR¹¹ (VI),

   in der
   - R¹⁰, R¹¹: unabhängig voneinander ausgewählt sind aus der Gruppe bestehend aus C₁-C₁₀-Alkyl, C₆-C₁₀-Aryl und C₆-C₁₂-Aralkyl,
und einem Dinitril der allgemeinen Formel (VII)

NC-R³-CN (VII).

Die Begriffe "mindestens ein Diamin der allgemeinen Formel (IV)" und "Komponente (A)" werden im Rahmen der vorliegenden Erfindung synonym gebraucht und besitzen daher die gleiche Bedeutung.

"Mindestens ein Diamin der allgemeinen Formel (IV)" bedeutet im Rahmen der vorliegenden Erfindung sowohl genau ein Diamin der allgemeinen Formel (IV) als auch eine Mischung aus zwei oder mehreren Diaminen der allgemeinen Formel (IV).

Die Begriffe "Komponente (B)" und "mindestens ein Dicarbonsäurederivat" werden im Rahmen der vorliegenden Erfindung synonym gebraucht und besitzen daher die gleiche Bedeutung.

"Mindestens ein Dicarbonsäurederivat" bedeutet im Rahmen der vorliegenden Erfindung sowohl genau ein Dicarbonsäurederivat als auch eine Mischung aus zwei oder mehreren Dicarbonsäurederivaten.

Die Komponenten (A) und (B) werden weiter unten näher beschrieben.

Die Komponenten (A) und (B) können zur Herstellung des tetrahydrofuranhaltigen Polyamids (tP) in beliebigen Mengen umgesetzt werden. Vorzugsweise werden im Bereich von 55 bis 45 mol.-% der Komponente (A) und im Bereich von 45 bis 55 mol.-% der Komponente (B) umgesetzt, jeweils bezogen auf die Gesamtstoffmenge der Komponenten (A) und (B).

Besonders bevorzugt werden im Bereich von 51 bis 49 mol.-% der Komponente (A) und im Bereich von 49 bis 51 mol.-% der Komponente (B) umgesetzt, jeweils bezogen auf die Gesamtstoffmenge der Komponenten (A) und (B).

Besonders bevorzugt werden im Bereich von 49,5 bis 50,5 mol.-% der Komponente (A) und im Bereich von 49,5 bis 50,5 mol.-% der Komponente (B) umgesetzt, jeweils bezogen auf die Gesamtstoffmenge der Komponenten (A) und (B).

Es versteht sich von selbst, dass sich die mol.-% der Komponenten (A) und (B) auf die mol.-% der Komponenten (A) und (B) beziehen, bevor diese miteinander reagiert haben. Während der Umsetzung der Komponenten (A) und (B) kann sich das molare Verhältnis der Komponenten (A) und (B) und damit auch deren mol.-% gegebenenfalls ändern.

Die Summe der mol.-% der Komponenten (A) und (B) ergibt üblicherweise 100 mol.-%.

Die Umsetzung der Komponenten (A) und (B) kann nach dem Fachmann bekannten Methoden erfolgen. Bevorzugt erfolgt die Umsetzung in Gegenwart eines Lösungsmittels.

Geeignete Lösungsmittel sind dem Fachmann bekannt. Beispielsweise werden als Lösungsmittel im Bereich von 1 bis 40 Gew.-% Wasser, bevorzugt im Bereich von 1 bis 30 Gew.-% und insbesondere bevorzugt im Bereich von 1 bis 25 Gew.-% Wasser eingesetzt.

Die Summe der Gew.-% der Komponenten (A) und (B) ergibt dann üblicherweise 60 bis 99 Gew.-%, bevorzugt 70 bis 99 Gew.-% und insbesondere bevorzugt 75 bis 99 Gew.-%, jeweils bezogen auf das Gesamtgewicht der Komponenten (A), (B) und des Lösungsmittels.

Darüber hinaus ist es möglich, dass die Umsetzung der Komponenten (A) und (B) in Gegenwart eines Katalysators erfolgt.

Geeignete Katalysatoren sind dem Fachmann bekannt und beispielsweise ausgewählt aus der Gruppe bestehend aus Phosphorverbindungen, wie beispielsweise Natriumhypophosphit, Phosphorige Säure, Triphenylphosphin oder Triphenylphosphit

Zusätzlich zu den Komponenten (A) und (B) kann eine Komponente (E), mindestens ein Endgruppenregler umgesetzt werden.

"Mindestens ein Endgruppenregler" bedeutet im Rahmen der vorliegenden Erfindung sowohl genau ein Endgruppenregler als auch eine Mischung aus zwei oder mehreren Endgruppenreglern.

Die Begriffe "Komponente (E)" und "mindestens ein Endgruppenregler" werden im Rahmen der vorliegenden Erfindung synonym gebraucht und besitzen die gleiche Bedeutung.

Beispielsweise werden im Bereich von 0 bis 1 Gew.-% der Komponente (E), bevorzugt im Bereich von 0,1 bis 0,9 Gew.-% und insbesondere bevorzugt im Bereich von 0,1 bis 0,75 Gew.-% umgesetzt, jeweils bezogen auf das Gesamtgewicht der Komponenten (A), (B) und (E).

Gegenstand der vorliegenden Erfindung ist somit auch die erfindungsgemäße Verwendung, wobei das tetrahydrofuranhaltige Polymer (tP) hergestellt wird zusätzlich durch Umsetzung von 0,1 bis 0,9 Gew.-% einer Komponente (E), mindestens eines Endgruppenreglers, bezogen auf das Gesamtgewicht der Komponenten (A), (B) und (E).

Geeignete Endgruppenregler sind dem Fachmann als solche bekannt. Geeignete Endgruppenregler sind beispielsweise Monocarbonsäuren, Monoamine, Benzolmonocarbonsäuren, Naphthalinmonocarbonsäuren, Benzolmonoamine, Naphthalinmonoamine oder Disäuren oder Anhydride, die mit Aminen Imide bilden.

Bevorzugte Endgruppenregler sind beispielsweise C₁-C₁₀-Alkanmonocarbonsäuren, C₅-C₈-Cycloalkanmonocarbonsäuren, Benzolmonocarbonsäuren, Naphthalinmonocarbonsäuren, C₁-C₁₀-Alkanmonoamine, C₅-C₈-Cycloalkanmonoamine, Benzolmonoamine, Naphthalinmonoamine oder Disäuren oder Anhydride, die mit Aminen Imide bilden. Besonders bevorzugte Endgruppenregler sind beispielsweise ausgewählt aus der Gruppe bestehend aus Essigsäure, Propionsäure, Cyclopentancarbonsäure, Cyclohexancarbonsäure, Benzoesäure, Naphthalincarbonsäure, Cyclopentanamin, Cyclohexanamin, 4-Amino-2,2,6,6-Tetramethylpiperidin (TAD), Anilin, Naphthalinamin, Bernsteinsäure und Bernsteinsäureanhydrid.

Die Summe der Gewichtsprozente der Komponenten (A), (B), gegebenenfalls (E), gegebenenfalls des Lösungsmittels und gegebenenfalls des Katalysators, ergeben üblicherweise 100 Gew.-%.

Die Umsetzung der Komponenten (A) und (B) ist dem Fachmann als solche bekannt. Es handelt sich um eine Kondensationsreaktion, wobei die Komponente (A) und die Komponente (B) polymerisieren.

Die Umsetzung kann in allen dem Fachmann bekannten Reaktoren stattfinden. Diese Reaktoren können beispielsweise Batchreaktoren, Semi-kontinuierliche oder kontinuierlich Reaktoren sein. Diese Reaktoren sind dem Fachmann bekannt.

In einer bevorzugten Ausführungsform der vorliegenden Erfindung werden zunächst die Komponenten (A) und (B) in einem ersten Reaktor stöchiometrisch (molares Verhältnis der Komponente (A) zu Komponente (B) 1:1) miteinander unter Bildung eines Salzes der Komponenten (A) und (B) umgesetzt. Anschließend erfolgt die Umsetzung dieses Salzes der Komponenten (A) und (B) zu dem tetrahydrofuranhaltigen Polyamid (tP) in demselben ersten Reaktor oder in einem zweiten Reaktor, bevorzugt in einem zweiten Reaktor.

Dem Fachmann ist die Bildung eines Salzes aus einer Disäure und einem Diamin als solche bekannt, beispielsweise erfolgt die Herstellung des Salzes der Komponenten (A) und (B) in Analogie zu der Herstellung des AH-Salzes aus der Adipinsäure und 1,6-Diaminohexan.

In einer bevorzugten Ausführungsform wird zur Herstellung des tetrahydrofuranhaltigen Polyamids (tP) zusätzlich eine Komponente (C), mindestens ein Lactam, umgesetzt.

Gegenstand der vorliegenden Erfindung ist daher auch die erfindungsgemäße Verwendung, wobei zur Herstellung des tetrahydrofuranhaltigen Polyamids (tP) zusätzlich eine Komponente (C), mindestens ein Lactam, umgesetzt wird.

Die Begriffe "Komponente (C)" und "mindestens ein Lactam" werden im Rahmen der vorliegenden Erfindung synonym gebraucht und besitzen daher die gleiche Bedeutung.

"Mindestens ein Lactam" bedeutet im Rahmen der vorliegenden Erfindung sowohl genau ein Lactam als auch eine Mischung aus zwei oder mehreren Lactamen.

Beispielsweise werden im Bereich von 40 bis 99 Gew.-% der Komponente (C) umgesetzt, bevorzugt im Bereich von 45 bis 95 Gew.-% und insbesondere bevorzugt im Bereich von 50 bis 90 Gew.-%, jeweils bezogen auf das Gesamtgewicht der Komponenten (A), (B), (C) sowie gegebenenfalls des Lösungsmittels und des Katalysators.

Es versteht sich von selbst, dass, wenn zusätzlich eine Komponente (C) umgesetzt wird, sich die Gewichtsprozente der Komponenten (A), (B), (C) sowie gegebenenfalls (E), des Lösungsmittels und des Katalysators auf das Gesamtgewicht der Komponenten (A), (B), (C) sowie gegebenenfalls (E), des Lösungsmittels und des Katalysators, beziehen.

Es versteht sich außerdem von selbst, dass sich auch die Gewichtsprozente der Komponente (C) auf die Gewichtsprozente vor der Umsetzung der Komponenten (A), (B) und (C) sowie gegebenenfalls (E), beziehen.

Die Summe der Gewichtsprozente der Komponenten (A), (B), (C), gegebenenfalls (E), des Lösungsmittels und des Katalysators ergeben dann üblicherweise 100 Gew.-%.

Es versteht sich von selbst, dass, wenn zusätzlich die Komponente (C) umgesetzt wird, das tetrahydrofuranhaltige Polyamid (tP) dann zusätzlich Polyamideinheiten (PE) enthält, die ausgewählt sind aus der Gruppe bestehend aus Polyamideinheiten der allgemeinen Formel (II).

Darüber hinaus kann zusätzlich mindestens ein weiteres Diamin (Komponente (A')) umgesetzt werden.

Geeignete weitere Diamine (Komponente (A')) sind dem Fachmann als solche bekannt. Es versteht sich von selbst, dass das mindestens eine weitere Diamin (Komponente (A')) von der Komponente (A) verschieden ist.

Bevorzugt ist das mindestens eine weitere Diamin ausgewählt aus Alkandiaminen mit 4 bis 36 Kohlenstoffatomen, insbesondere Alkandiaminen mit 6 bis 12 Kohlenstoffatomen sowie aromatischen Diaminen.

Besonders bevorzugt ist das mindestens eine weitere Diamin ausgewählt aus der Gruppe bestehend aus 1,4-Butandiamin, 1,5-Pentandiamin, 1,6-Hexamethylendiamin, 1,7-Heptamethylendiamin, 1,8-Octamethylendiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamin, C36-Dimerdiamin, Bis-(4-amino-3-methylcyclohexyl)-methan (MACM), 4,4-Methylen-bis(cyclohexylamin) (PACM), Bis-(4-amino-3-ethyl-cyclohexyl)-methan (EACM), Bis-(4-amino-3,5-dimethylcyclohexyl)methan (TMACM), Isophorondiamin, m-Xylylendiamin, p-Xylylendiamin, 2,2-Di-(4-aminophenyl)-propan, 2,2-Di-(4-aminocyclohexyl)-propan, 2,4,4-Trimethylhexamethylendiamin und 1,5-Diamino-2-methyl-pentan.

Dem Fachmann ist klar, dass, wenn mindestens ein weiteres Diamin (Komponente (A')) umgesetzt wird, das tetrahydrofuranhaltige Polyamid (tP) dann zusätzlich Polyamideinheiten (PE) enthält, die ausgewählt sind aus der Gruppe bestehend aus Polyamideinheiten der allgemeinen Formel (III).

### Komponente (A)

Erfindungsgemäß ist die Komponente (A) mindestens ein Diamin der allgemeinen Formel (IV), in der
- R¹, R²: unabhängig voneinander ausgewählt sind aus der C₁-C₁₀-Alkandiyl.

Bevorzugt sind
- R¹, R²: unabhängig voneinander ausgewählt aus C₁-C₄-Alkandiyl,
insbesondere bevorzugt sind
- R¹,R²: dasselbe C₁-C₄-Alkandiyl,
am meisten bevorzugt sind
- R¹, R²: beide Methylen.

Wenn R¹ und R² beide Methylen sind, so ist die Komponente (A) 2,5-Bis(aminomethyl)tetrahydrofuran.

Verfahren zur Herstellung der Komponente (A) sind dem Fachmann bekannt. Beispielsweise kann die Komponente (A) nach dem in der WO 2012/119929 beschriebenen Verfahren hergestellt werden.

### Komponente (B)

Erfindungsgemäß ist die Komponente (B) mindestens ein Dicarbonsäurederivat ausgewählt aus der Gruppe bestehend aus einer Dicarbonsäure der allgemeinen Formel (V), einem Dicarbonsäureester der allgemeinen Formel (VI) und einem Dinitril der allgemeinen Formel (VII).

Bevorzugt haben die Substituenten der Komponente (B) in der Formel (V), der Formel (VI) und der Formel (VII) die folgende Bedeutung:
- R³: ist ausgewählt aus der Gruppe bestehend aus unsubstituiertem C₁-C₃₆-Alkandiyl und C₆-C₂₀-Arylen;
- R¹⁰, R¹¹: sind unabhängig voneinander ausgewählt aus der Gruppe bestehend aus unsubstituiertem C₁-C₁₀-Alkyl, C₆-C₁₀-Aryl und C₆-C₁₂-Aralkyl.

Besonders bevorzugt haben die Substituenten in der Formel (V), der Formel (VI) und der Formel (VII) die folgende Bedeutung:
- R³: ist ausgewählt aus der Gruppe bestehend aus unsubstituiertem C₁-C₁₂-Alkandiyl und C₆-C₁₀-Arylen;
- R¹⁰, R¹¹: sind unabhängig voneinander ausgewählt aus der Gruppe bestehend aus unsubstituiertem C₁-C₄-Alkyl, C₆-C₁₀-Aryl und C₆-C₁₂-Aralkyl.

Am meisten bevorzugt haben die Substituenten in der Formel (V), der Formel (VI) und der Formel (VII) die folgende Bedeutung:
- R³: ist unsubstituiertes C₄-C₁₂-Alkandiyl;
- R¹⁰, R¹¹: sind unabhängig voneinander ausgewählt aus der Gruppe bestehend aus unsubstituiertem C₁-C₄-Alkyl.

"Aralkyl" bedeutet vorliegend, dass der Substituent ein Alkyl ist, das wiederum durch ein Aryl substituiert ist. Anders ausgedrückt beschreibt Aralkyl ein Alkandiyl, das durch ein Arylradikal substituiert ist. Ein C₆-C₂₀-Aralkyl ist ein Aralkyl, das 6 bis 20 Kohlenstoffatome enthält. Das Aralkyl kann beispielsweise ein Aryl sein, wie oben definiert. Beispiele für Aralkyle sind beispielsweise Phenyl, Methyl (Benzyl) oder Phenylethyl.

Bevorzugt ist die Komponente (B) ausgewählt aus der Gruppe bestehend aus einer Dicarbonsäure der allgemeinen Formel (V) und einem Dicarbonsäureester der allgemeinen Formel (VI).

Für die Dicarbonsäure (V) und den Dicarbonsäureester (VI) gelten die zuvor beschriebenen Ausführungen und Bevorzugungen.

In einer bevorzugten Ausführungsform ist die Dicarbonsäure (V) ausgewählt aus der Gruppe bestehend aus Oxalsäure (Ethandisäure), Malonsäure (Propandisäure), Bernsteinsäure (Butandisäure), Glutarsäure (Pentandisäure), Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 1,3-Cyclohexandicarbonsäure, 1,4-Cyclohexandicarbonsäure, Isophthalsäure, Terephthalsäure, Naphthalendicarbonsäure, C36-Dimersäure, 2,5-Tetrahydrofurandicarbonsäure, 2,5-Furandicarbonsäure, 5-Sulfoisophthalsäure-mononatriumsalz und 5-Sulfoisophthalsäure-mono-lithiumsalz.

Besonders bevorzugt ist die Dicarbonsäure (V) ausgewählt aus der Gruppe bestehend aus Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 2,5-Tetrahydrofurandicarbonsäure, 1,3-Cyclohexandicarbonsäure, 1,4-Cyclohexandicarbonsäure, Isophthalsäure, Terephthalsäure, Naphtalendicarbonsäure und C36-Dimersäure.

### Komponente (C)

Die Komponente (C) ist erfindungsgemäß mindestens ein Lactam.

Unter Lactam werden erfindungsgemäß zyklische Amide verstanden, die im Ring 3 bis 12 Kohlenstoffatome, bevorzugt 6 bis 12 Kohlenstoffatome aufweisen. Geeignete Lactame sind beispielsweise ausgewählt aus der Gruppe bestehend aus 3-Aminopropansäurelactam (β-Lactam; β-Propiolactam), 4-Aminobutansäurelactam (γ-Lactam; γ-Butyrolactam), 5-Aminopentansäurelactam (γ-Lactam; δ-Valerolactam), 6-Aminohexansäurelactam (ε-Lactam; ε-Caprolactam), 7-Aminoheptansäurelactam (ζ-Lactam; ζ-Heptanolactam), 8-Aminooktansäurelactam (η-Lactam; η-Oktanolactam), 9-Nonansäurelactam (θ-Lactam; θ-Nonanolactam), 10-Dekansäurelactam (ω-Dekanolactam), 11-Undekansäurelactam (ω-Undekanolactam) und 12-Dodekansäurelactam (ω-Dodekanolactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Bevorzugt werden unsubstituierte Lactame eingesetzt, wobei 12-Dodekansäurelactam (ω-Dodekanolactam) und ε-Lactam (ε-Caprolactam) bevorzugt sind. Besonders bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel C₆H₁₁NO. Verfahren zur Herstellung von Caprolactam sind dem Fachmann als solche bekannt.

### Polymerfilm (P)

Der Polymerfilm (P) umfasst erfindungsgemäß mindestens eine erste Schicht, die das tetrahydrofuranhaltige Polyamid (tP) enthält.

Unter "mindestens eine erste Schicht" wird im Rahmen der vorliegenden Erfindung sowohl genau eine erste Schicht, als auch zwei oder mehrere erste Schichten verstanden.

Anders ausgedrückt, enthält der Polymerfilm (P) also das tetrahydrofuranhaltige Polyamid (tP).

Der Polymerfilm (P) kann zusätzlich zu dem tetrahydrofuranhaltigen Polyamid (tP) mindestens ein zweites Polymer (P2) enthalten.

"Mindestens ein zweites Polymer (P2)" bedeutet im Rahmen der vorliegenden Erfindung sowohl genau ein zweites Polymer (P2) als auch eine Mischung aus zwei oder mehreren zweiten Polymeren (P2).

Als mindestens ein zweites Polymer (P2) eignen sich alle dem Fachmann bekannten Polymere. Es versteht sich von selbst, dass das mindestens eine zweite Polymer (P2) von dem tetrahydrofuranhaltigen Polyamid (tP) verschieden ist.

Bevorzugt ist das mindestens eine zweite Polymer (P2) ausgewählt aus der Gruppe bestehend aus Polyolefinen, Poly(ethylenvinylalkoholen), Poly(ethylenvinylacetaten), Poly(ethylenterephthalaten), Polyvinylidenchloriden, mit Maleinsäureanhydrid gegraftenen Polyolefinen, Polyestern und lonomeren. Besonders bevorzugt ist das mindestens eine zweite Polymer (P2) ausgewählt aus der Gruppe bestehend aus Polyolefinen, Poly(ethylenvinylalkoholen), Poly(ethylenvinylacetaten), Poly(ethylenterephthalaten), Polyvinylidenchloriden und mit Maleinsäureahydrid gegraftenen Polyolefinen. Am meisten bevorzugt ist das mindestens eine zweite Polymer (P2) ausgewählt aus der Gruppe bestehend aus Polyolefinen, mit Maleinsäureanhydrid gegraftenen Polyolefinen und Ethylenvinylalkoholen.

Ist das mindestens eine zweite Polymer (P2) ausgewählt aus der Gruppe bestehend aus Polyolefinen, so ist es bevorzugt, dass zusätzlich mit Maleinsäureanhydrid gegraftete Polyolefine als mindestens ein zweites Polymer (P2) eingesetzt werden. Dabei ist es möglich, dass als das mindestens eine zweite Polymer (P2) eine Mischung aus Polyolefinen und mit Maleinsäureanhydrid gegrafteten Polyolefinen eingesetzt wird. Ebenso ist es möglich, dass, wenn der Polymerfilm (P) ein weiter unten beschriebener Multilayerfilm ist, der Polymerfilm (P) mindestens eine erste zweite Schicht mindestens eines zweiten Polymers (P2) umfasst, wobei das mindestens eine zweite Polymer (P2) der ersten zweiten Schicht ausgewählt ist aus der Gruppe bestehend aus mit Maleinsäureanhydrid gegrafteten Polyolefinen und der Polymerfilm (P) mindestens eine zweite zweite Schicht mindestens eines zweiten Polymers (P2) umfasst, wobei das mindestens eine zweite Polymer (P2) der zweiten zweiten Schicht ausgewählt ist aus der Gruppe bestehend aus Polyolefinen. Der Polymerfilm (P) enthält die erste zweite Schicht, dann vorzugsweise zwischen der ersten Schicht, die das tetrahydrofuranhaltige Polyamid (tP) enthält und der zweiten zweiten Schicht.

Polyolefine als solche sind dem Fachmann bekannt. Bevorzugte Polyolefine sind Polypropylen (PP), low-density Polyethylen (LDPE) linear-low-density Polyethylen (LLDPE) und very-low-density Polyethylen (VLDPE).

Linear-low-density Polyethylen (LLDPE) ist ein Copolymer aus Ethylen und mindestens einem C₄-C₈-α-Olefin. Linear-low-density Polyethylen (LLDPE) zeichnet sich durch lange Polymerketten mit kurzen Seitenketten aus. Die Länge der Seitenketten in linear-low-density Polyethylen (LLDPE) ist üblicherweise kürzer als in low-density Polyethylen (LDPE) und in medium-density Polyethylen (MDPE). Der Schmelzpunkt von linear-low-density Polyethylen (LLDPE) liegt vorzugsweise im Bereich von 110 bis 130 °C, seine Dichte liegt im Bereich von 0,91 bis 0,93 g/cm³.

Very-low-density Polyethylen (VLDPE) sind Copolymere aus Ethylen und mindestens einem C₄-C₈-α-Olefin. Sie weisen üblicherweise einen Schmelzpunkt im Bereich von 110 bis 130 °C und eine Dichte im Bereich von 0,86 bis < 0,91 g/cm³ auf. Der Anteil an C₄-C₈-α-Olefinen in VLDPE ist in der Regel höher als im LLDPE.

Unter "C₄-C₈-α-Olefinen" werden im Rahmen der vorliegenden Erfindung lineare und verzweigte, bevorzugt lineare, Alkylene mit 4 bis 8 Kohlenstoffatomen verstanden, die in α-Position ungesättigt sind, also in α-Stellung eine C-C-Doppelbindung aufweisen. Beispiele hierfür sind 1-Buten, 1-Penten, 1-Hexen, 1-Hepten und 1-Octen. 1-Buten, 1-Hexen und 1-Octen sind bevorzugt.

Bevorzugt als Poly(ethylenvinylacetate) sind Copolymere von Ethylen mit Vinylacetat. Beispielsweise werden im Bereich von 82 bis 99,9 Gew.-% Ethylen und im Bereich von 0,1 bis 18 Gew.-% Vinylacetat, bevorzugt im Bereich von 88 bis 99,9 Gew.-% Ethylen und im Bereich von 0,1 bis 12 Gew.-% Vinylacetat zur Herstellung eingesetzt.

Bevorzugte Poly(ethylenvinylalkohole) sind erhältlich durch vollständige oder teilweise Verseifung der vorstehend beschriebenen Poly(ethylenvinylacetate). Beispielsweise enthalten die Poly(ethylenvinylalkohole) im Bereich von 50 bis 75 mol -% Ethylen und im Bereich von 25 bis 50 mol-% Vinylalkohol, bezogen auf die Gesamtstoffmenge der Poly(ethylenvinylalkohole).

Der Polymerfilm (P) kann das mindestens eine zweite Polymer (P2) als Blend (Mischung) mit dem tetrahydrofuranhaltigen Polyamid (tP) enthalten. Dann enthält der Polymerfilm (P) den Blend aus dem tetrahydrofuranhaltigen Polyamid (tP) und dem mindestens einem zweiten Polymer (P2) in der mindestens einen ersten Schicht.

Darüber hinaus ist es möglich und erfindungsgemäß bevorzugt, dass der Polymerfilm (P) die mindestens eine erste Schicht umfasst, die das tetrahydrofuranhaltige Polyamid (tP) enthält, und dass der Polymerfilm (P) mindestens eine zweite Schicht umfasst, die das mindestens eine zweite Polymer (P2) enthält.

In dieser Ausführungsform ist es bevorzugt, dass die mindestens eine erste Schicht, die das tetrahydrofuranhaltige Polyamid (tP) enthält, kein zweites Polymer (P2) enthält.

Es ist also bevorzugt, dass der Polymerfilm (P) mindestens eine erste Schicht enthält, die das tetrahydrofuranhaltige Polyamid (tP) enthält, und der Polymerfilm (P) zusätzlich mindestens eine zweite Schicht umfasst, die mindestens ein zweites Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

Gegenstand der vorliegenden Erfindung ist daher auch die erfindungsgemäße Verwendung, wobei der Polymerfilm (P) zusätzlich mindestens eine zweite Schicht umfasst, die mindestens ein zweites Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

"Mindestens eine zweite Schicht" bedeutet im Rahmen der vorliegenden Erfindung sowohl genau eine zweite Schicht als auch zwei oder mehrere zweite Schichten. Zwei oder mehrere zweite Schichten sind bevorzugt.

Umfasst der Polymerfilm (P) außer der mindestens einen ersten Schicht keine zweite Schicht, so wird der Polymerfilm (P) auch als Monofilm bezeichnet. Ist der Polymerfilm (P) ein Monofilm, so kann er genau eine erste Schicht und keine zweite Schicht umfassen, ebenso ist es möglich, dass er zwei oder mehrere erste Schichten und keine zweite Schicht umfasst. Umfasst der Polymerfilm (P) zwei oder mehrere erste Schichten und ist er ein Monofilm, so weisen die zwei oder mehreren ersten Schichten alle dieselbe Zusammensetzung auf.

Umfasst der Polymerfilm (P) mindestens eine erste Schicht, die das tetrahydrofuranhaltige Polyamid (tP) enthält, und mindestens eine zweite Schicht, die das mindestens eine zweite Polymer (P2) enthält, so wird der Polymerfilm (P) auch als Multilayerfilm bezeichnet.

Beispielsweise umfasst der Polymerfilm (P) dann 1 bis 11 erste Schichten, die das tetrahydrofuranhaltige Polyamid (tP) enthalten, und 1 bis 13 zweite Schichten, die das mindestens eine zweite Polymer (P2) enthalten. Bevorzugt umfasst der Polymerfilm (P) 1 bis 5 erste Schichten, die das tetrahydrofuranhaltige Polyamid (tP) enthalten, und 1 bis 11 weitere Schichten, die das mindestens eine zweite Polymer (wP) enthalten. Insbesondere bevorzugt umfasst der Polymerfilm (P) 1 bis 4 erste Schichten, die das das tetrahydrofuranhaltige Polyamid (tP) enthalten, und 1 bis 10 zweite Schichten, die das mindestens eine zweite Polymer (P2) enthalten.

Gegenstand der vorliegenden Erfindung ist daher auch die erfindungsgemäße Verwendung, wobei der Polymerfilm (P) 1 bis 4 erste Schichten und 1 bis 10 zweite Schichten umfasst.

Besonders bevorzugt besteht die mindestens eine erste Schicht aus dem tetrahydrofuranhaltigen Polyamid (tP). Ebenso ist es bevorzugt, dass die mindestens eine zweite Schicht aus dem mindestens einen zweiten Polymer (P2) besteht.

Der Begriff "Polymerfilm (P)" umfasst im Rahmen der vorliegenden Erfindung also sowohl Monofilme als auch Multilayerfilme.

Gegenstand der vorliegenden Erfindung ist daher auch die erfindungsgemäße Verwendung, wobei der Polymerfilm (P) eine Monofilm oder ein Multilayerfilm ist.

Der Polymerfilm (P) weist beispielsweise eine Dicke im Bereich von 0,1 µm bis 1 mm auf, bevorzugt eine Dicke im Bereich von 5 bis 500 µm und insbesondere bevorzugt im Bereich von 10 bis 200 µm.

Gegenstand der vorliegenden Erfindung ist daher auch die erfindungsgemäße Verwendung, wobei der Polymerfilm (P) eine Dicke im Bereich von 0,1 µm bis 1 mm aufweist.

Ist der Polymerfilm (P) ein Monofilm und umfasst er genau eine erste Schicht, so weist die erste Schicht die gleiche Dicke auf wie der Polymerfilm (P), also beispielsweise eine Dicke im Bereich von 0,1 µm bis 1 mm, bevorzugt im Bereich von 5 bis 500 µm und insbesondere bevorzugt im Bereich von 10 bis 200 µm.

Ist der Polymerfilm (P) ein Monofilm und umfasst er zwei oder mehrere erste Schichten, so ist die Dicke jeder ersten Schicht üblicherweise kleiner als die Dicke des Polymerfilms (P). Die Summe der Dicken der einzelnen ersten Schichten entspricht dann im Allgemeinen der Dicke des Polymerfilms (P). Beispielsweise weist die mindestens eine erste Schicht, die das tetrahydrofuranhaltige Polyamid (tP) enthält, dann eine Dicke im Bereich von 0,1 µm bis 300 µm, bevorzugt im Bereich von 0,5 bis 150 µm und insbesondere bevorzugt im Bereich von 0,5 bis 50 µm auf.

Ist der Polymerfilm ein Multilayerfilm, so ist die Dicke der einzelnen Schichten des Polymerfilms (P), also sind die Dicke der mindestens einen ersten Schicht, die das tetrahydrofuranhaltige Polyamid (tP) enthält, und die Dicke der mindestens einen zweiten Schicht, die das mindestens eine zweite Polymer (P2) enthält, üblicherweise kleiner als die Dicke des Polymerfilms (P). Die Summe der Dicken der einzelnen Schichten entspricht dann im Allgemeinen der Dicke des Polymerfilms (P).

Beispielsweise weist die mindestens eine erste Schicht, die das mindestens eine tetrahydrofuranhaltige Polyamid (tP) enthält, dann eine Dicke im Bereich von 0,1 bis 300 µm auf, bevorzugt im Bereich von 0,5 bis 150 µm und insbesondere bevorzugt im Bereich von 0,5 bis 50 µm.

Die mindestens eine zweite Schicht, die das mindestens eine zweite Polymer (P2) enthält, weist dann beispielsweise eine Dicke im Bereich von 0,1 bis 300 µm auf, bevorzugt im Bereich von 0,5 bis 150 µm und insbesondere bevorzugt im Bereich von 0,5 bis 50 µm.

Der Polymerfilm (P) kann mindestens einen Haftvermittler enthalten. Diese Ausführungsform ist bevorzugt, wenn der Polymerfilm ein Multilayerfilm ist.

"Mindestens ein Haftvermittler" bedeutet im Rahmen der vorliegenden Erfindung sowohl genau ein Haftvermittler als auch eine Mischung aus zwei oder mehreren Haftvermittlern.

Ist der Polymerfilm (P) ein Multilayerfilm, so kann der mindestens eine Haftvermittler zusammen mit dem tetrahydrofuranhaltigen Polyamid (tP) in der mindestens einen ersten Schicht enthalten sein. Ebenso ist es möglich, dass der mindestens eine Haftvermittler zusammen mit dem mindestens einen zweiten Polymer (P2) in der mindestens einen zweiten Schicht enthalten ist. Darüber hinaus ist es möglich, dass der mindestens eine Haftvermittler als mindestens eine zusätzliche Schicht in dem Polymerfilm (P) enthalten ist. Diese Ausführungsform ist bevorzugt.

Wenn der mindestens eine Haftvermittler als mindestens eine zusätzliche Schicht in dem Polymerfilm (P) enthalten ist, so ist diese mindestens eine zusätzliche Schicht bevorzugt zwischen der mindestens einen zweiten Schicht, die das mindestens eine zweite Polymer (P2) enthält, und der mindestens einen ersten Schicht, die das tetrahydrofuranhaltige Polyamid (tP) enthält, angeordnet. Die mindestens eine zusätzliche Schicht des mindestens einen Haftvermittlers weist beispielsweise eine Dicke im Bereich von 0,1 bis 300 µm auf, bevorzugt im Bereich von 0,5 bis 150 µm und insbesondere bevorzugt im Bereich von 0,5 bis 50 µm.

Geeignete Haftvermittler sind dem Fachmann als solche bekannt. Bevorzugt als Haftvermittler sind Copolymere aus Ethylen mit Maleinsäureanhydrid oder ein Copolymer aus Ethylen mit Vinylacetat. Bevorzugt ist ein Copolymer aus linear-low-density Polyethylen (LLDPE) und Maleinsäureanhydrid oder ein Copolymer aus Ethylen und Vinylacetat, wobei zur Herstellung des Copolymers > 18 Gew.-% Vinylacetat und < 82 Gew.-% Ethylen eingesetzt werden. Diese Copolymere sind kommerziell erhältlich, beispielsweise unter dem Handelsnamen *Bynel 4105* der Firma *DuPont* oder *Escorene FL00119* der Firma *Exxon.*

Bevorzugt sind als Haftvermittler eingesetzte Copolymere aus Ethylen mit Maleinsäureanhydrid mit Maleinsäureanhydrid gegraftete Polymere oder Copolymere aus Ethylen.

Der Polymerfilm (P) kann außerdem Additive enthalten. Derartige Additive sind dem Fachmann bekannt und beispielsweise ausgewählt aus der Gruppe bestehend aus Stabilisatoren, Farbstoffen, Antistatika, Tackifiern, Antiblockmitteln, Verarbeitungshilfsmitteln, Antioxidantien, Lichtstabilisatoren, UV-Absorbern, Gleitmitteln und Nukleierungshilfsmitteln.

Als Farbstoffe sind organische und anorganische Pigmente, wie beispielsweise mit einer Schlichte versehenes Titandioxid, geeignet. Als Tackifier eignen sich beispielsweise Polyisobutylen (PIB) oder Ethylvinylacetat (EVA). Geeignete Antiblockmittel sind beispielsweise Siliziumdioxid- oder Calciumcarbonatpartikel. Geeignete Lichtstabilisatoren sind beispielsweise sogenannte HALS (Hindered Amine Light Stabilizer). Als Verarbeitungshilfs- oder Gleitmittel kann beispielsweise Ethylenbisstearamid (EBS) Wachs eingesetzt werden. Nukleierungshilfsmittel können beispielsweise alle Arten von organischen oder anorganischen Kristallisationskeimbildnern sein, wie z.B. Talk.

Die Additive können sowohl in der mindestens einen ersten Schicht enthalten sein als auch in der mindestens einen zweiten Schicht. Sie können in nur einer dieser Schichten enthalten sein, ebenso ist es möglich, dass sie jeder dieser Schichten enthalten sind.

### Herstellung des Polymerfilms (P)

Der Polymerfilm (P) kann nach allen dem Fachmann bekannten Methoden hergestellt werden. Bevorzugt wird der Polymerfilm in einem Verfahren, das die folgenden Schritte umfasst, hergestellt:
a) Bereitstellen eines tetrahydrofuranhaltigen Polyamids (tP) in geschmolzener Form in einem ersten Extruder,
b) Extrusion des in Schritt a) bereitgestellten tetrahydrofuranhaltigen Polyamids (tP) in geschmolzener Form aus dem ersten Extruder durch eine Düse unter Erhalt eines Films des tetrahydrofuranhaltigen Polyamids (tP) in geschmolzener Form,
c) Abkühlen des in Schritt b) erhaltenen Films des tetrahydrofuranhaltigen Polyamids (tP) in geschmolzener Form, wobei das tetrahydrofuranhaltige Polyamid (tP) erstarrt unter Erhalt des Polymerfilms (P).

Gegenstand der vorliegenden Erfindung ist daher auch ein Verfahren zur Herstellung eines Polymerfilms (P), der mindestens eine erste Schicht umfasst, die ein tetrahydrofuranhaltiges Polyamid (tP) enthaltend Tetrahydrofuraneinheiten der allgemeinen Formel (I) 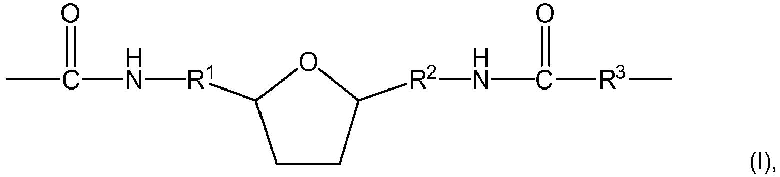 in der
- R¹, R²: unabhängig voneinander ausgewählt sind aus C₁-C₁₀-Alkandiyl;
- R³: ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁴, C₁-C₁₀-Alkyl und C₆-C₁₀-Aryl, wobei
R⁴ ausgewählt ist aus der Gruppe bestehend aus H und C₁-C₁₀-Alkyl,
enthält, umfassend die Schritte
a) Bereitstellen des tetrahydrofuranhaltigen Polyamids (tP) in geschmolzener Form in einem ersten Extruder,
b) Extrusion des in Schritt a) bereitgestellten tetrahydrofuranhaltigen Polyamids (tP) in geschmolzener Form aus dem ersten Extruder durch eine Düse unter Erhalt eines Films des tetrahydrofuranhaltigen Polyamids (tP) in geschmolzener Form,
c) Abkühlen des in Schritt b) erhaltenen Films des tetrahydrofuranhaltigen Polyamids (tP) in geschmolzener Form, wobei das tetrahydrofuranhaltige Polyamid (tP) erstarrt unter Erhalt des Polymerfilms (P).

In Schritt a) wird das tetrahydrofuranhaltige Polyamid (tP) in geschmolzener Form in einem ersten Extruder bereitgestellt.

"Ein erster Extruder" bedeutet im Rahmen der vorliegenden Erfindung sowohl genau ein erster Extruder als auch zwei oder mehrere erste Extruder. Üblicherweise werden genau so viele erste Extruder eingesetzt wie erste Schichten, die das tetrahydrofuranhaltige Polyamid (tP) enthalten, in dem Polymerfilm (P) enthalten sein sollen.

Soll der Polymerfilm (P) beispielsweise genau eine erste Schicht umfassen, die das tetrahydrofuranhaltige Polyamid (tP) enthält, so wird genau ein erster Extruder eingesetzt. Soll der Polymerfilm (P) genau zwei erste Schichten umfassen, die das tetrahydrofuranhaltige Polyamid (tP) enthalten, so werden genau zwei erste Extruder eingesetzt. Soll der Polymerfilm (P) genau fünf erste Schichten umfassen, die das tetrahydrofuranhaltige Polyamid (tP) enthalten, so werden genau fünf erste Extruder eingesetzt.

Beispielsweise werden 1 bis 11 erste Extruder eingesetzt, bevorzugt 1 bis 5 erste Extruder und besonders bevorzugt 1 bis 4 erste Extruder.

Für das tetrahydrofuranhaltige Polyamid (tP), das in Schritt i) bereitgestellt wird, gelten die zuvor beschriebenen Ausführungen und Bevorzugungen für das im Polymerfilm (P) enthaltene tetrahydrofuranhaltige Polyamid (tP) entsprechend.

Erfindungsgemäß wird das tetrahydrofuranhaltige Polyamid (tP) in geschmolzener Form bereitgestellt.

"In geschmolzener Form" bedeutet im Rahmen der vorliegenden Erfindung, dass das tetrahydrofuranhaltige Polyamid (tP) bei einer Temperatur bereitgestellt wird, die oberhalb der Schmelztemperatur (T_{M}) des tetrahydrofuranhaltigen Polyamids (tP) liegt. "In geschmolzener Form" bedeutet also, dass das tetrahydrofuranhaltige Polyamid (tP) eine Temperatur aufweist, die oberhalb der Schmelztemperatur (T_{M}) des tetrahydrofuranhaltigen Polyamids (tP) liegt. Liegt das tetrahydrofuranhaltige Polyamid (tP) in geschmolzener Form vor, so ist das tetrahydrofuranhaltige Polyamid (tP) fließfähig.

"Fließfähig" bedeutet, dass das tetrahydrofuranhaltige Polyamid (tP) in dem ersten Extruder gefördert werden kann und dass das tetrahydrofuranhaltige Polyamid (tP) aus dem ersten Extruder extrudiert werden kann.

Beispielsweise wird das tetrahydrofuranhaltige Polyamid (tP) in Schritt i) bei einer Temperatur im Bereich von 140 bis 320° C, bevorzugt im Bereich von 150 bis 300° C und insbesondere bevorzugt im Bereich von 160 bis 280° C, bereitgestellt, jeweils unter der Voraussetzung, dass die Temperatur, bei der das tetrahydrofuranhaltige Polyamid (tP) in Schritt a) bereitgestellt wird, oberhalb der Schmelztemperatur (T_{M}) des tetrahydrofuranhaltigen Polyamids (tP) liegt.

Das tetrahydrofuranhaltige Polyamid (tP) kann nach allen dem Fachmann bekannten Methoden in geschmolzener Form in dem ersten Extruder bereitgestellt werden.

Beispielsweise kann das tetrahydrofuranhaltige Polyamid (tP) in geschmolzener oder in fester Form dem ersten Extruder zugeführt werden. Wird das tetrahydrofuranhaltige Polyamid (tP) dem ersten Extruder in fester Form zugeführt, so kann es dem ersten Extruder beispielsweise als Granulat und/oder als Pulver zugeführt werden. Das tetrahydrofuranhaltige Polyamid (tP) wird dann in dem ersten Extruder aufgeschmolzen und so in geschmolzener Form in dem ersten Extruder bereitgestellt. Diese Ausführungsform ist bevorzugt.

Darüber hinaus ist es möglich, dass die Komponenten (A) und (B) sowie gegebenenfalls (C) direkt in dem ersten Extruder umgesetzt werden und so das tetrahydrofuranhaltige Polyamid (tP) in geschmolzener Form in dem ersten Extruder bereitgestellt wird. Verfahren hierzu sind dem Fachmann bekannt.

In Schritt b) wird das tetrahydrofuranhaltige Polyamid (tP) in geschmolzener Form aus dem ersten Extruder durch eine Düse extrudiert unter Erhalt eines Films des tetrahydrofuranhaltigen Polyamids (tP) in geschmolzener Form.

"Eine Düse" bedeutet im Rahmen der vorliegenden Erfindung sowohl genau eine Düse als auch zwei oder mehrere Düsen. Erfindungsgemäß bevorzugt ist genau eine Düse.

Als Düse eignen sich alle dem Fachmann bekannten Düsen, die es ermöglichen, einen Film aus dem tetrahydrofuranhaltigen Polyamid (tP) in geschmolzener Form zu extrudieren. Derartige Düsen sind beispielsweise Ringdüsen oder Schlitzdüsen.

Geeignete Ringdüsen und Schlitzdüsen sind dem Fachmann bekannt.

Wird beispielsweise der weiter unten beschriebene Schritt a1) durchgeführt, so ist es bevorzugt, dass in Schritt b) das tetrahydrofuranhaltige Polyamid (tP) in geschmolzener Form aus dem ersten Extruder mit dem mindestens einen zweiten Polymer (P2) in geschmolzener Form aus dem zweiten Extruder in der Düse, beispielsweise in der Ringdüse oder in der Schlitzdüse, zusammengeführt wird.

Insbesondere wird in Schritt b) das tetrahydrofuranhaltige Polyamid (tP) in geschmolzener Form aus dem ersten Extruder mit dem mindestens einen zweiten Polymer (P2) in geschmolzener Form aus dem zweiten Extruder so in der Düse zusammengeführt, dass der in Schritt b) erhaltene Film des tetrahydrofuranhaltigen Polyamids (tP) und des mindestens einen zweiten Polymers (P2) jeweils in geschmolzener Form mindestens eine erste Schicht umfasst, die das tetrahydrofuranhaltige Polyamid (tP) in geschmolzener Form enthält, und mindestens eine zweite Schicht umfasst, die das mindestens eine zweite Polymer (P2) in geschmolzener Form enthält.

Beispielsweise liegt die Dicke des Films des tetrahydrofuranhaltigen Polyamids (tP) in geschmolzener Form im Bereich von 0,1 µm bis 1 mm, bevorzugt im Bereich von 5 bis 500 µm und insbesondere bevorzugt im Bereich von 10 bis 200 µm.

Der Film des tetrahydrofuranhaltigen Polyamids (tP) in geschmolzener Form kann beispielsweise ein Flachfilm oder ein Schlauchfilm sein. Ein Schlauchfilm wird üblicherweise erhalten, wenn als Düse eine Ringdüse eingesetzt wird. Ein Flachfilm wird erhalten, wenn als Düse eine Schlitzdüse eingesetzt wird.

In Schritt c) wird der in Schritt b) erhaltene Film des tetrahydrofuranhaltigen Polyamids (tP) in geschmolzener Form abgekühlt. Dadurch erstarrt das tetrahydrofuranhaltige Polyamid (tP) unter Erhalt des Polymerfilms (P).

Zum Abkühlen des Films des tetrahydrofuranhaltigen Polyamids (tP) in geschmolzener Form eignen sich alle dem Fachmann bekannten Methoden. Beispielsweise kann der Film des tetrahydrofuranhaltigen Polyamids (tP) in geschmolzener Form abgekühlt werden durch Luft- oder Wasserkühlung oder durch Kontakt mit einer kalten Oberfläche.

Der Film des tetrahydrofuranhaltigen Polyamids (tP) in geschmolzener Form wird in Schritt c) beispielsweise auf eine Temperatur, die unterhalb der Schmelztemperatur (T_{M}) des tetrahydrofuranhaltigen Polyamids (tP) liegt, abgekühlt unter Erhalt des Polymerfilms (P). Bevorzugt wird der Film des tetrahydrofuranhaltigen Polyamids (tP) in geschmolzener Form in Schritt c) auf eine Temperatur, die unterhalb der Glasübergangstemperatur (T_{G}) des tetrahydrofuranhaltigen Polyamids (tP) liegt, abgekühlt.

Beispielsweise wird der Film des tetrahydrofuranhaltigen Polyamids (tP) in geschmolzener Form in Schritt c) auf eine Temperatur im Bereich von 0 bis 75 ° C, bevorzugt im Bereich von 10 bis 72° C und insbesondere bevorzugt im Bereich von 15 bis 70° C abgekühlt, wobei die Temperatur, auf die der Film des tetrahydrofuranhaltigen Polyamids (tP) in geschmolzener Form abgekühlt wird, unterhalb der Schmelztemperatur (T_{M}), bevorzugt unterhalb der Glasübergangstemperatur (T_{G}) des tetrahydrofuranhaltigen Polyamids (tP) liegt.

Für den in Schritt c) erhaltenen Polymerfilm (P) gelten die zuvor beschriebenen Ausführungen und Bevorzugungen.

Die Schritte b) und c) können nacheinander oder gleichzeitig durchgeführt werden.

Bevorzugt wird zusätzlich ein Schritt a1) durchgeführt, in dem mindestens ein zweites Polymer (P2) in geschmolzener Form in einem zweiten Extruder bereitgestellt wird.

Das Verfahren zur Herstellung des Polymerfilms (P) umfasst dann beispielsweise die folgenden Schritte:
a) Bereitstellen eines tetrahydrofuranhaltigen Polyamids (tP) in geschmolzener Form in einem ersten Extruder,
   a1) Bereitstellen mindestens eines zweiten Polymers (P2) in geschmolzener Form in einem zweiten Extruder,
b) Extrusion des in Schritt a) bereitgestellten tetrahydrofuranhaltigen Polyamids (tP) in geschmolzener Form aus dem ersten Extruder durch eine Düse und Extrusion des in Schritt a1) bereitgestellten mindestens einen zweiten Polymers (P2) in geschmolzener Form aus dem zweiten Extruder durch die Düse unter Erhalt eines Films des tetrahydrofuranhaltigen Polyamids (tP) und des mindestens einen zweiten Polymers (P2) jeweils in geschmolzener Form,
c) Abkühlen des in Schritt b) erhaltenen Films des tetrahydrofuranhaltigen Polyamids (tP) und des mindestens einen zweiten Polymers (P2) jeweils in geschmolzener Form, wobei das tetrahydrofuranhaltige Polyamid (tP) und/oder das mindestens eine zweite Polymer (P2) erstarrt unter Erhalt des Polymerfilms (P).

In Schritt a1) wird das mindestens eine zweite Polymer (P2) in geschmolzener Form in einem zweiten Extruder bereitgestellt.

"Ein zweiter Extruder" bedeutet im Rahmen der vorliegenden Erfindung sowohl genau ein zweiter Extruder als auch zwei oder mehrere zweite Extruder. Bevorzugt sind zwei oder mehrere zweite Extruder.

Bevorzugt werden so viele zweite Extruder eingesetzt wie zweite Schichten, die das mindestens eine zweite Polymer (P2) enthalten, in dem Polymerfilm (P) enthalten sein sollen. Beispielsweise werden 1 bis 13 zweite Extruder eingesetzt, bevorzugt 1 bis 11 zweite Extruder und besonders bevorzugt 1 bis 10 zweite Extruder.

Soll der Polymerfilm (P) beispielsweise genau eine zweite Schicht, die das mindestens eine zweite Polymer (P2) enthält, umfassen, so wird genau ein zweiter Extruder eingesetzt. Soll der Polymerfilm (P) genau zwei zweite Schichten umfassen, die das mindestens eine zweite Polymer (P2) enthalten, so werden genau zwei zweite Extruder eingesetzt. Soll der Polymerfilm (P) genau fünf zweite Schichten umfassen, die das mindestens eine zweite Polymer (P2) enthalten, so werden genau fünf zweite Extruder eingesetzt.

Für die zweiten Extruder gelten die zuvor beschriebenen Ausführungen und Bevorzugungen für den ersten Extruder entsprechend.

Für das mindestens eine zweite Polymer (P2) gelten die zuvor beschriebenen Ausführungen und Bevorzugungen für das gegebenenfalls in dem Polymerfilm (P) enthaltene zweite Polymer (P2) entsprechend.

Erfindungsgemäß wird das mindestens eine zweite Polymer (P2) in Schritt a1) in geschmolzener Form bereitgestellt.

"In geschmolzener Form" bedeutet, dass das mindestens eine zweite Polymer (P2) bei einer Temperatur, die oberhalb der Schmelztemperatur (T_{M(P2)}) des mindestens einen zweiten Polymers (P2) liegt, bereitgestellt wird. In geschmolzener Form bedeutet also, dass das mindestens eine zweite Polymer (P2) eine Temperatur aufweist, die oberhalb der Schmelztemperatur (T_{M(P2)}) des mindestens einen zweiten Polymers (P2) liegt. Liegt das mindestens eine zweite Polymer (P2) in geschmolzener Form vor, so ist das mindestens eine zweite Polymer (P2) fließfähig.

"Fließfähig" bedeutet, dass das mindestens eine zweite Polymer (P2) in dem zweiten Extruder gefördert werden kann und dass das mindestens eine zweite Polymer (P2) aus dem zweiten Extruder extrudiert werden kann.

Beispielsweise wird das mindestens eine zweite Polymer (P2) in Schritt a1) bei einer Temperatur im Bereich von 100 bis 350° C, bevorzugt im Bereich von 120 bis 300° C und insbesondere bevorzugt im Bereich von 140 bis 250° C bereitgestellt, jeweils unter der Voraussetzung, dass die Temperatur, bei der das mindestens eine zweite Polymer P2) bereitgestellt wird, oberhalb der Schmelztemperatur (T_{M(P2)}) des mindestens einen zweiten Polymers (P2) liegt.

Das mindestens eine zweite Polymer (P2) kann nach allen dem Fachmann bekannten Methoden in dem zweiten Extruder in geschmolzener Form bereitgestellt werden.

Beispielsweise kann das mindestens eine zweite Polymer (P2) in geschmolzener oder in fester Form dem zweiten Extruder zugeführt werden. Wird das mindestens eine zweite Polymer (P2) dem zweiten Extruder in fester Form zugeführt, so kann es dem zweiten Extruder beispielsweise als Granulat und/oder als Pulver zugeführt werden. Das mindestens eine zweite Polymer (P2) wird dann in dem zweiten Extruder aufgeschmolzen und so in geschmolzener Form in dem zweiten Extruder bereitgestellt.

Schritt a1) wird üblicherweise gleichzeitig mit Schritt a) durchgeführt. Für die Schritte a), b) und c), wenn der Schritt a1) durchgeführt wird, gelten die zuvor beschriebenen Ausführungen und Bevorzugungen für die Schritte a), b) und c), wenn der Schritt a1) nicht durchgeführt wird.

Der in Schritt b) erhaltene Film, der das tetrahydrofuranhaltige Polyamid (tP) und das mindestens eine zweite Polymer (P2), jeweils in geschmolzener Form, enthält, enthält das tetrahydrofuranhaltige Polyamid (tP) in mindestens einer ersten Schicht und das mindestens eine zweite Polymer (P2) in mindestens einer zweiten Schicht. Üblicherweise enthält der in Schritt b) erhaltene Film so viele erste Schichten, die das tetrahydrofuranhaltige Polyamid (tP) in geschmolzener Form enthalten, wie erste Extruder in Schritt a) eingesetzt worden sind und so viele zweite Schichten, die das mindestens eine zweite Polymer (P2) in geschmolzener Form enthalten, wie zweite Extruder in Schritt a1) eingesetzt worden sind.

Es versteht sich von selbst, dass, wenn Schritt a1) durchgeführt wird, der in Schritt c) erhaltene Polymerfilm (P) ein Multilayerfilm ist.

Bevorzugt wird der Polymerfilm (P) verstreckt. Dies ist insbesondere bevorzugt, wenn das tetrahydrofuranhaltige Polyamid (tP) teilkristallin ist.

Der Polymerfilm (P) kann im Anschluss an Schritt c) verstreckt werden. Ebenso ist es möglich, den Polymerfilm (P) während Schritt c), also während des Abkühlens des Films des tetrahydrofuranhaltigen Polyamids (tP) sowie gegebenenfalls des mindestens einen zweiten Polymers (P2), zu verstrecken.

Gegenstand der vorliegenden Erfindung ist daher auch ein Verfahren, bei dem zusätzlich der folgende Schritt durchgeführt wird:
d) Verstrecken des Polymerfilms (P) unter Erhalt eines verstreckten Polymerfilms (vP).

Die Schritte c) und d) können nacheinander oder gleichzeitig durchgeführt werden. Beim Verstrecken des Polymerfilms (P) richten sich die Polymerketten des tetrahydrofuranhaltigen Polyamids (tP) aus und die Kristallinität des tetrahydrofuranhaltigen Polyamids (tP) kann sich erhöhen.

Es ist darüber hinaus möglich, dass sich auch die Polymerketten des gegebenenfalls in dem Polymerfilm (P) enthaltenen mindestens einen zweiten Polymers (P2) beim Verstrecken ausrichten. Dadurch kann sich auch die Kristallinität des mindestens einen zweiten Polymers (P2) erhöhen.

Das Verstrecken kann nach allen dem Fachmann bekannten Methoden erfolgen.

Beispielsweise kann der Polymerfilm (P) verstreckt werden, indem er über mindestens eine Rolle, bevorzugt ein Rollensystem, geführt wird oder indem er in seiner Breite gedehnt wird. Wird der Polymerfilm (P) als Schlauch erhalten, so ist es ebenso möglich, dass der Polymerfilm (P) verstreckt wird, indem Luft in den Schlauch des Polymerfilms (P) eingeblasen wird und der Polymerfilm (P) dadurch verstreckt wird.

Selbstverständlich sind auch Kombinationen der Verfahren möglich. Wenn der Polymerfilm (P) über eine mindestens eine Rolle, bevorzugt über ein Rollensystem, geführt wird, so wird der Polymerfilm (P) in Extrusionsrichtung, also in seiner Länge, verstreckt. Wird der Polymerfilm (P) dagegen in seiner Breite gedehnt, so wird er senkrecht zur Extrusionsrichtung verstreckt.

Wird der Polymerfilm (P) zum Verstrecken über mindestens eine Rolle, bevorzugt über ein Rollensystem, geführt, so richten sich die Polymerketten des tetrahydrofuranhaltigen Polyamids (tP) sowie gegebenenfalls des mindestens einen zweiten Polymers (P2) parallel zu der Richtung, in die verstreckt wird, aus. Der erhaltene verstreckte Polymerfilm (vP) ist dann uniaxial orientiert. Ebenso ist der erhaltene verstreckte Polymerfilm (vP) uniaxial orientiert, wenn der Polymerfilm (P) zum Verstrecken in seiner Breite gedehnt wird. Auch dann richten sich die Polymerketten des tetrahydrofuranhaltigen Polyamids (tP) sowie gegebenenfalls des mindestens einen zweiten Polymers (P2) parallel zu der Richtung, in die verstreckt wird, aus.

"Uniaxial orientiert" bedeutet, dass die Polymerketten im Wesentlichen in eine Richtung ausgerichtet sind.

Wird der Polymerfilm (P) zum Verstrecken über ein Rollensystem geführt und zusätzlich in seiner Breite gedehnt, so richten sich die Polymerketten des tetrahydrofuranhaltigen Polyamids (tP) sowie gegebenenfalls des mindestens einen zweiten Polymers (P2) parallel zu beiden Richtungen, in die verstreckt wird, aus. Der erhaltene verstreckte Polymerfilm (vP) ist dann biaxial orientiert.

"Biaxial orientiert" bedeutet, dass die Polymerketten im Wesentlichen in zwei verschiedene, bevorzugt senkrecht zueinander stehende Richtungen ausgerichtet sind.

Wird der Polymerfilm (P) als Schlauch erhalten und der Polymerfilm (P) verstreckt, indem Luft in den Schlauch des Polymerfilms (P) eingeblasen wird, so ist der erhaltene verstreckte Polymerfilm (vP) uniaxial orientiert.

Werden die vorstehend beschriebenen Verfahren zum Verstrecken des Polymerfilms (P) kombiniert, wird der Polymerfilm (P) also beispielsweise als Schlauch erhalten und der Polymerfilm (P) verstreckt, indem Luft in den Schlauch des Polymerfilms (P) eingeblasen und er gleichzeitig über Rollen geführt und dabei ebenfalls verstreckt wird, so ist der erhaltene verstreckte Polymerfilm (vP) biaxial orientiert.

Der Polymerfilm (P) wird üblicherweise bei einer Temperatur verstreckt, die oberhalb der Glasübergangstemperatur (T_{G)}) des tetrahydrofuranhaltigen Polyamids (tP) liegt und die unterhalb der Schmelztemperatur (T_{M}) des tetrahydrofuranhaltigen Polyamids (tP) liegt. Ist der Polymerfilm (P) ein Multilayerfilm, so ist es außerdem bevorzugt, dass der Polymerfilm (P) bei einer Temperatur verstreckt wird, die unterhalb der Schmelztemperatur (T_{M(P2)}) des mindestens einen zweiten Polymers (P2) liegt. Insbesondere bevorzugt bei einer Temperatur, die unterhalb der Schmelztemperatur des bei der niedrigsten Temperatur schmelzenden mindestens einen zweiten Polymers (P2) liegt.

Der Polymerfilm (P) kann beispielsweise in einem Castverfahren, in einem Blasverfahren, in einem Biaxially-oriented Polyamide Film-Verfahren (BOPA-erfahren) oder in einem Multiblasverfahren hergestellt werden.

Gegenstand der vorliegenden Erfindung ist daher auch die erfindungsgemäße Verwendung, wobei der Polymerfilm (P) in einem Castverfahren, in einem Blasverfahren, in einem Biaxially-oriented Polyamide Film-Verfahren oder einem Multiblasverfahren hergestellt wird.

Das Castverfahren, das Blasverfahren, das Biaxially-oriented Polyamide Film-Verfahren und das Multiblasverfahren sind dem Fachmann als solche bekannt.

Üblicherweise wird der Polymerfilm (P) bei diesen Verfahren verstreckt, sodass ein verstreckter Polymerfilm (vP) erhalten wird.

Nachfolgend wird die vorliegende Erfindung anhand von Beispielen näher erläutert.

### Beispiele

### Zu den Messmethoden:

Die Viskositätszahl der Polyamide wurde in einer 0,5 gew.-%igen Lösung in 96 gew.-%iger Schwefelsäure bei 25 °C gemäß EN ISO 307: 2007 + Amd 1: 2013 bestimmt.

Die Glasübergangstemperaturen, Schmelztemperaturen und Schmelzenthalpien wurden nach ISO 11357-1: 2009, ISO 11357-2: 2013 und ISO 11357-3: 2011 bestimmt. Dazu wurden zwei Heizläufe durchgeführt und die Glasübergangs- und Schmelztemperaturen sowie die Schmelzenthalpie anhand des zweiten Heizlaufs ermittelt.

Es wurden die folgenden Komponenten eingesetzt:

### Tetrahydrofuranhaltiges Polyamid (tP)

- tP-1:: Copolymer aus 80 mol-% Caprolactam und 20 mol-% des Salzes aus Bis-(aminomethyl)tetrahydrofuran und Adipinsäure: In einem 1,2L Büchireaktor wurden Caprolactam (320,0 g), Bis-(aminomethyl)tetrahydrofuran (37,7 g), Adipinsäure (42,3 g) und Wasser (100 g) gemischt. Zur Salzbildung wurde die Mischung für 70 Minuten bei 90°C Außentemperatur gerührt. Anschließend wurde die Außentemperatur auf 250°C erhöht (Innentemperatur 219°C, Druck 12 bar) und für 80 Minuten gerührt. Dann wurde über 60 Minuten der Druck auf Atmosphärendruck reduziert. Beim Erreichen des Atmosphärendruckes betrug die Innentemperatur 243°C. Bei dieser Temperatur wurde die Mischung noch 70 Minuten gerührt und die Polymerschmelze anschließend abgelassen, in einem Wasserbad abgekühlt und dann granuliert. Das Granulat wurde mit Wasser extrahiert und anschließend getrocknet (24h, 80°C, Vakuumschrank). Das Polymer zeigte eine Glasübergangstemperatur von 52°C, eine Schmelztemperatur von 188°C und eine Schmelzenthalpie von 51 J/g. Die Viskositätszahl betrug 118 g/mL.
- tP-2:: Copolymer aus 85 mol-% Caprolactam und 15 mol-% des Salzes aus Bis-(aminomethyl)tetrahydrofuran und Adipinsäure. In einem 1,2L Büchireaktor wurden Caprolactam (340,0 g), Bis-(aminomethyl)tetrahydrofuran (28,2 g), Adipinsäure (31,8 g) und Wasser (120 g) gemischt. Zur Salzbildung wurde die Mischung für 35 Minuten bei 90°C Außentemperatur gerührt. Anschließend wurde die Außentemperatur auf 250°C erhöht (Innentemperatur 225°C, Druck 12 bar) und für 105 Minuten gerührt. Dann wurde über 45 Minuten der Druck auf Atmosphärendruck reduziert. Beim Erreichen des Atmosphärendruckes betrug die Innentemperatur 244°C. Bei dieser Temperatur wurde die Mischung noch 55 Minuten gerührt und die Polymerschmelze anschließend abgelassen, in einem Wasserbad abgekühlt und dann granuliert. Das Granulat wurde mit Wasser extrahiert und anschließend getrocknet (24h, 80°C, Vakuumschrank). Das Polymer zeigte eine Glasübergangstemperatur von 53°C, eine Schmelztemperatur von 196°C und eine Schmelzenthalpie von 60 J/g. Die Viskositätszahl betrug 122 g/mL.
- tP-3:: Homopolymer aus Bis-(aminomethyl)tetrahydrofuran und Adipinsäure. In einem 1,2L Büchireaktor wurden Caprolactam (340,0 g), Bis-(aminomethyl)tetrahydrofuran (28,2 g), Adipinsäure (31,8 g) und Wasser (120 g) gemischt. Zur Salzbildung wurde die Mischung für 25 Minuten bei 90°C Außentemperatur gerührt. Anschließend wurde die Außentemperatur auf 240°C erhöht (Innentemperatur 206°C, Druck 12 bar) und für 85 Minuten gerührt. Dann wurde über 40 Minuten der Druck auf Atmosphärendruck reduziert. Beim Erreichen des Atmosphärendruckes betrug die Innentemperatur 227°C. Bei dieser Temperatur wurde die Mischung noch 70 Minuten gerührt und die Polymerschmelze anschließend abgelassen, in einem Wasserbad abgekühlt und dann granuliert. Das Granulat wurde mit Wasser extrahiert und anschließend getrocknet (24h, 80°C, Vakuumschrank). Das Polymer zeigte eine Glasübergangstemperatur von 54°C, eine Schmelztemperatur von 219°C und eine Schmelzenthalpie von 74 J/g. Die Viskositätszahl betrug 82 g/mL

### Zweites Polymer (P2)

- P2-1:: Polyamid 6, erhältlich unter dem Handelsnamen Ultramid B27 der BASF SE. Das Polymer zeigte eine Glasübergangstemperatur von 72°C, eine Schmelztemperatur von 214°C und eine Schmelzenthalpie von 53 J/g. Die Viskositätszahl betrug 147 g/mL

### Herstellung von Polymerfilmen (P)

Es wurden Multilayerfilme mit dem Aufbau PE // PA // PE hergestellt. Als PE wurde eine Mischung im Gewichtsverhältnis 80:20 aus Lupolen 3020 K der Firma LyondeIIBaseII^{®} (Low Density Polyethylen; LDPE) und Bynel 4105 der Firma DuPont^{®} (Linear Low Density Polyethylen; LLDPE) eingesetzt. Als PA wurde das in Tabelle 1 angegebene PA eingesetzt. Die Multilayerfilme wurden auf einer 3-Schicht Flachfolienanlage der Firma Collin^{®} (Teach-Line Extruder E20T 25 D lang) mit einem Feedblock 3 Schicht mit 100 mm Schlitzdüse produziert. Die Filme hatten eine Dicke von 150 µm und die Schichten eine Schichtstärke von 50 µm // 50 µm // 50 µm.

Die Sauerstoffpermeabilität (SP) der erhaltenen Polymerfilme wurde gemäß ASTM D3985-05 (2010) bei 23 °C und 0 % relativer Luftfeuchtigkeit bestimmt. Außerdem wurde die Sauerstoffpermeabilität (SP) bei 23 °C und 85 % relativer Luftfeuchtigkeit gemäß ASTM F1927-07 bestimmt. Die Ergebnisse sind in Tabelle 1 zu sehen.

**Tabelle 1**

| Beispiel | | B1 | B2 | B3 | V4 |
|---|---|---|---|---|---|
| PA | | tP-1 | tP-2 | tP-3 | P2-1 |
| SP (23 °C, 0%) | [cm³ µm/m²/Tag/bar] | 985 | 1185 | 571 | 1800 |
| SP (23 °C, 85 %) | [cm³ µm/m²/Tag/bar] | 2605 | 2680 | 5270 | 2650 |

## Patentansprüche

1. Verwendung eines tetrahydrofuranhaltigen Polyamids (tP) enthaltend Tetrahydrofuraneinheiten der allgemeinen Formel (I) 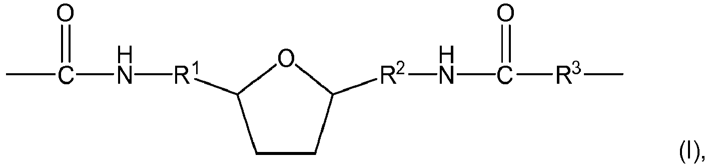 in der
R¹, R² unabhängig voneinander ausgewählt sind aus C₁-C₁₀-Alkandiyl;
R³ ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁴, C₁-C₁₀-Alkyl und C₆-C₁₀-Aryl, wobei
R⁴ ausgewählt ist aus der Gruppe bestehend aus H und C₁-C₁₀-Alkyl,
in einem Polymerfilm (P), der mindestens eine erste Schicht umfasst, die das tetrahydrofuranhaltige Polyamid (tP) enthält, zur Erhöhung der Sauerstoffbarriere des Polymerfilms (P).

2. Verwendung gemäß Anspruch 1, **dadurch gekennzeichnet, dass** das tetrahydrofuranhaltige Polyamid (tP) ein Copolymer ist.

3. Verwendung gemäß Anspruch 1 oder 2, **dadurch gekennzeichnet, dass** das tetrahydrofuranhaltige Polyamid (tP) zusätzlich Polyamideinheiten (PE) enthält, die ausgewählt sind aus der Gruppe bestehend aus Polyamideinheiten der allgemeinen Formel (II) 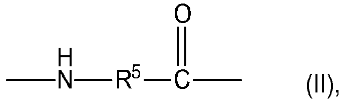 in der
R⁵ ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁸, C₁-C₁₀-Alkyl und C₆-C₁₀-Aryl, wobei
R⁸ ausgewählt ist aus der Gruppe bestehend aus H und C₁-C₁₀-Alkyl,
Polyamideinheiten der allgemeinen Formel (III) 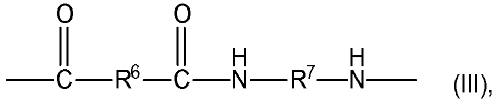 in der
R⁶, R⁷ unabhängig voneinander ausgewählt sind aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁹, C₁-C₁₀-Alkyl und C₆-C₁₀-Aryl, wobei
R⁹ ausgewählt ist aus der Gruppe bestehend aus H und C₁-C₁₀-Alkyl,
und Kombinationen daraus.

4. Verwendung gemäß Anspruch 3, **dadurch gekennzeichnet, dass** das tetrahydrofuranhaltige Polyamid (tP) im Bereich von 1 bis 51 mol.-% Tetrahydrofuraneinheiten der allgemeinen Formel (I) und im Bereich von 49 bis 99 mol.-% Polyamideinheiten (PE) enthält, jeweils bezogen auf die Gesamtstoffmenge des tetrahydrofuranhaltigen Polyamids (tP).

5. Verwendung gemäß einem der Ansprüche 1 bis 4, **dadurch gekennzeichnet, dass** in der allgemeinen Formel (I) R¹ und R² beide Methylen und R³ ausgewählt aus der Gruppe bestehend aus unsubstituiertem C₄-C₁₂-Alkandiyl sind.

6. Verwendung gemäß einem der Ansprüche 1 bis 5, **dadurch gekennzeichnet, dass** das tetrahydrofuranhaltige Polyamid (tP) hergestellt wird zumindest durch die Umsetzung der folgenden Komponenten:
(A) mindestens ein Diamin der allgemeinen Formel (IV) 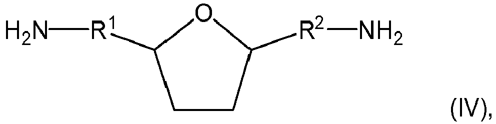
(B) mindestens ein Dicarbonsäurederivat ausgewählt aus der Gruppe bestehend aus einer Dicarbonsäure der allgemeinen Formel (V)
HOOC-R³-COOH (V),
einem Dicarbonsäureester der allgemeinen Formel (VI)
R¹⁰OOC-R³-COOR¹¹ (VI),
in der
R¹⁰, R¹¹ unabhängig voneinander ausgewählt sind aus der Gruppe bestehend aus C₁-C₁₀-Alkyl, C₆-C₁₀-Aryl und C₆-C₁₂-Aralkyl,
und einem Dinitril der allgemeinen Formel (VII)
NC-R³-CN (VII).

7. Verwendung gemäß Anspruch 6, **dadurch gekennzeichnet, dass** zur Herstellung des tetrahydrofuranhaltigen Polyamids (tP) zusätzlich eine Komponente (C), mindestens ein Lactam, umgesetzt wird.

8. Verwendung gemäß einem der Ansprüche 1 bis 7, **dadurch gekennzeichnet, dass** der Polymerfilm (P) eine Dicke im Bereich von 0,1 µm bis 1 mm aufweist.

9. Verwendung gemäß einem der Ansprüche 1 bis 8, **dadurch gekennzeichnet, dass** der Polymerfilm (P) zusätzlich mindestens eine zweite Schicht umfasst, die mindestens ein zweites Polymer (P2), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

10. Verwendung gemäß Anspruch 9, **dadurch gekennzeichnet, dass** der Polymerfilm (P) 1 bis 4 erste Schichten und 1 bis 10 zweite Schichten umfasst.

11. Verwendung gemäß einem der Ansprüche 1 bis 10, **dadurch gekennzeichnet, dass** der Polymerfilm (P) in einem Castverfahren, in einem Blasverfahren, in einem Biaxially-oriented Polyamide Film-Verfahren oder einem Multiblasverfahren hergestellt wird.

12. Verwendung gemäß einem der Ansprüche 1 bis 11, **dadurch gekennzeichnet, dass** das tetrahydrofuranhaltige Polyamid (tP) eine Schmelztemperatur (T_{M}), die im Bereich von 140 bis 220 °C liegt, aufweist.

13. Verwendung gemäß einem der Ansprüche 1 bis 12, **dadurch gekennzeichnet, dass** das tetrahydrofuranhaltige Polyamid (tP) eine Glasübergangstemperatur (T_{G}), die im Bereich von 35 bis 75 °C liegt, aufweist.

14. Verfahren zur Herstellung eines Polymerfilms (P), der mindestens eine erste Schicht umfasst, die ein tetrahydrofuranhaltiges Polyamid (tP) enthaltend Tetrahydrofuraneinheiten der allgemeinen Formel (I) 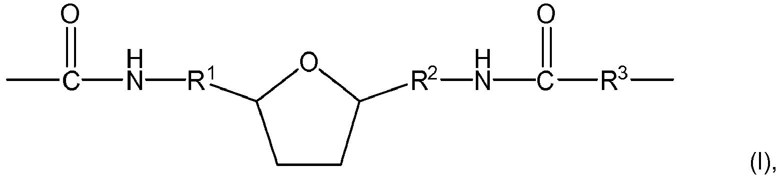 in der
R¹, R² unabhängig voneinander ausgewählt sind aus C₁-C₁₀-Alkandiyl;
R³ ausgewählt ist aus der Gruppe bestehend aus unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁴, C₁-C₁₀-Alkyl und C₆-C₁₀-Aryl, wobei
R⁴ ausgewählt ist aus der Gruppe bestehend aus H und C₁-C₁₀-Alkyl,
enthält, umfassend die Schritte
a) Bereitstellen des tetrahydrofuranhaltigen Polyamids (tP) in geschmolzener Form in einem ersten Extruder,
b) Extrusion des in Schritt a) bereitgestellten tetrahydrofuranhaltigen Polyamids (tP) in geschmolzener Form aus dem ersten Extruder durch eine Düse unter Erhalt eines Films des tetrahydrofuranhaltigen Polyamids (tP) in geschmolzener Form,
c) Abkühlen des in Schritt b) erhaltenen Films des tetrahydrofuranhaltigen Polyamids (tP) in geschmolzener Form, wobei das tetrahydrofuranhaltige Polyamid (tP) erstarrt unter Erhalt des Polymerfilms (P).
